(19) Europäisches Patentamt
European Patent Office
Office européen des brevets

(11) Publication number: **0 081 376**
**A2**

(12) # EUROPEAN PATENT APPLICATION

(21) Application number: 82306508.1

(51) Int. Cl.³: B 24 B 5/42

(22) Date of filing: 07.12.82

(30) Priority: 09.12.81 GB 8137152

(43) Date of publication of application: 15.06.83 Bulletin 83/24

(84) Designated Contracting States: DE GB

(71) Applicant: GKN TECHNOLOGY LIMITED
Group Technological Centre Birmingham New Road
Wolverhampton West Midlands WV4 6BW(GB)

(72) Inventor: Arkell, Robert Henry
The Dormers Sandpit Lane
Hilton Bridgnorth Shropshire(GB)

(72) Inventor: Benson, Peter William Black
3A Leighswood Road
Aldridge Walsall West Midlands(GB)

(74) Representative: Dodd, Graham Marshall et al,
Guest Keen & Nettlefolds Plc. Group Patents and
Licensing Department PO Box 55 Cranford Street
Smethwick Warley West Midlands B66 2RZ(GB)

(54) **Crankshaft centring.**

(57) A procedure in the manufacturing of a complex machined component from a blank to determine if there is an acceptable location of the component within the external envelope of the blank by determining the envelope of the blank by scanning the blank with a signal-producing device, acting on the result with a computer, and comparing said computed blank envelope with the envelope of the component; the method can also be used to see if there is a position of the component within the blank in which the machined component has a rotational out-of-balance within predetermined limits.

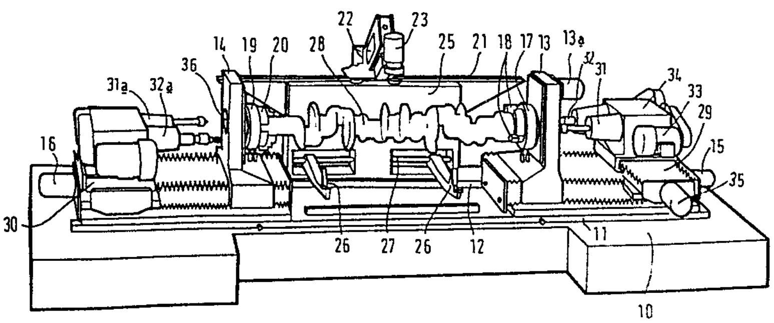


EP 0 081 376 A2

Croydon Printing Company Ltd.

80.011/BCR Crankshaft Centring

This invention relates to the manufacture of a complex machined component. The invention has been developed in relation to the manufacture of crankshafts for internal combustion engines.

The invention is concerned with determining whether a complex machined component will fit within a blank which has to be machined to produce the component.

By a complex component we mean a component which, when compared with the blank from which it is to be machined, is such that one cannot determine merely by visual inspection or even by simple measurement whether or not the component will fit within the blank. In the case of a complex component one would have to make a multiplicity of measurements about different axes to define the shape of the component. A typical complex component is a crankshaft and it is not possible merely by inspection to determine whether a crankshaft of given dimensions can be machined from a given forged blank.

The invention is concerned not only with determining whether a complex component can be machined from a blank but also in determining the best position for the component within the blank envelope to obtain a predetermined rotary balance. Thus in machining a crankshaft from a blank, not only will the application of the invention enable one to find a location of the finished crankshaft within the blank which will allow the crankshaft to be fully machined but will also allow one to position the crankshaft such that the rotary balance is within predetermined limits. It may be, of course, that the application of the invention will show that there is no position in which the crankshaft can be machined within the blank to ensure that all the surfaces which need to be machined are machined and that the rotary balance will be within predetermined limits.

Considering now the manufacture of a crankshaft for an internal combustion engine, these are usually made by machining a blank which has been forged from a billet.

The journals and crank pins and parts of the webs are machined, but typically other parts of the webs will remain in the as-forged condition. After such machining, the shaft must be dynamically balanced to certain tolerances, and this is done by rotating the machined shaft in a balancing machine to determine the amount and location of material which must be removed from the shaft to bring it to the required condition of balance. Such removal of material is usually done by drilling in the webs of the shaft and obviously it is desirable that the minimum amount of material is required to be removed in this way.

The forging of the shaft blank is a relatively inaccurate process compared with the tolerances which must be adhered to in the machining of the shaft, and considerable dimensional variations can arise in the forged blank over the life of a set of forging dies. For this reason the forged blank is designed to be of a size such that a large amount of material, possibly even as high as 30% of its original mass, is removed from it in the machining process. The forged blank presents a large envelope within which the machined shaft must fit and there is considerable scope for selection of where the machined shaft is actually going to be within the envelope.

The first step in machining a crankshaft is to decide where, relative to the forged blank, the axis of rotation of the finished shaft is going to lie, all other dimensions for machining purposes are taken from such axis of rotation. Once the position of the axis of rotation within the blank has been determined, the ends of the blank are centre drilled to define the axis and then machining of the blank can start about said rotary axis which is also the machining axis.

Hitherto, determination of where in the forged blank the axis of rotation is to be has been achieved by either 'geometric centring' or 'mass centring'. In the former process, the end journals of the forged blank are simply marked at their centres and centre drilled for machining. This method takes no account of where the material of the blank is distributed between the end journals, and it is quite conceivable that the machined shaft may require an undesirably large amount of material to be removed for its final dynamic balancing. It is conceivable even that the machined shaft might not be capable of being balanced if there is not sufficient material available to be removed in the required place. The balancing required in the machined shaft depends on those parts of the forged blank which have not been machined, since by design the machined parts of a shaft, considered alone, will be in dynamic balance.

In the technique known as mass centring the shaft forging is rotated in a machine which senses the state of dynamic balance of the blank and thus determines where the axis of rotation of the shaft (which is the machining axis of the blank) should be for balance. When machining has been done about the axis thus determined, very little material should be required to be removed in the final balancing operation. If the material required to be removed from the machined shaft to balance it shows some pattern as to disposition and magnitude over a number of shafts, it is possible to feed back into the initial centring operation a correction factor. However, this makes use of information derived from previously machined and balanced shafts, which may not be totally applicable to fresh shafts because of tolerances and inconsistences in the forged blanks which arise over the life of a set of forging dies. In general, however, the mass centring operation is not always totally satisfactory because it involves looking at the forged blank as a whole rather than at the distribution of material along it.

It is an object of one aspect of the invention to provide means for determining whether a complex machined component can be successfully machined from a blank.

According to this aspect of the invention we provide a procedure in the manufacture of a complex machined component from a blank the determination of either:-

(A) an acceptable location of the component within the external envelope of the blank such that all surfaces which require to be machined on said component are within said envelope; or
(B) that no such acceptable location can be found within the blank envelope:-
said determination being effected by the following steps:
(a) determining relative to a datum the co-ordinates of a multiplicity of points on the surface of the blank by scanning the blank with a signal-producing device;
(b) computing the envelope of the blank from said co-ordinates;
(c) comparing said computed blank envelope with the envelope of the component expressed in a form comparable to that of the computed envelope;
(d) determining from said comparison whether or not the machined surfaces of the component fit within the computed blank envelope;
if as a result of step (d) the machined surfaces of the component will fit within the computed envelope of the blank then
(e) recording or storing or marking on the blank data with reference to which the machining can be carried out.

Normally the machining will be carried out while the blank is rotating about an axis and in such a case step (a) is carried out while the blank is mounted for rotation about an axis and is turned about said axis and if, as a result of step (d) there is an acceptable location of the component within the blank in which the machined surfaces of the component will fit within the computed envelope of the blank then
(f) determining by computation the position of the axis of rotation of the component (the machining axis) relative to the blank corresponding to said acceptable location; and
(g) recording or storing or marking on the blank the resultant position of the machining axis and if required the acceptable location of the component along said machining axis.

Considered more narrowly, the invention has as its object to provide a procedure to determine not only whether a complex article can be machined from a blank but also whether the article as machined will have an out of balance about its rotational axis within predetermined tolerances.

According to this aspect of the invention, therefore, we provide as a procedure in the manufacture of a component which is to be machined from a blank while rotating about an axis and when completed have an out-of-balance about said axis within predetermined tolerances the determination of either:-

(A) an acceptable location of the component within the external envelope of the blank;
such that (1) all surfaces which require to be machined on said component are within said envelope and (2) the out-of-balance of said component about its rotational axis will be within said predetermined tolerances; or
(B) that no such acceptable location can be found within the blank envelope:-

said determination being effected by the following steps:
(a) mounting said blank for rotation about a longitudinal axis;
(b) determining relative to a datum (e.g. said axis) the co-ordinates of a multiplicity of points on the surface of the blank by scanning the blank with a signal-producing device;
(c) computing the envelope of the blank from said co-ordinates;
(d) comparing said computed blank envelope with the envelope of the finished component expressed in a form comparable with that of the computed envelope;
(e) determining from said comparison whether or not the machined surfaces of the component fit within the computed blank envelope;
if as a result of step (e) there is an acceptable location of the component within the blank in which the machined surfaces of the component will fit within the computed envelope of the blank then:
(f) determining by computation the position of the axis of rotation of the component (the machining axis) relative to the blank corresponding to said acceptable location;
(g) computing the out-of-balance of the finished component about the machining axis;
(h) computing a new position of the machining axis of the component relative to the blank to bring the out-of-balance of the finished component to a desired value (for example zero);
(i) and then recording or storing or marking on the blank the resultant position of the machining axis and if required the acceptable location of the component along said machining axis.

Where the component is to be machined about a rotary axis the co-ordinates of the envelope of the blank may be determined in terms of $\underline{r}$, $\underline{\theta}$ and $\underline{x}$ where:-

r is the radius of the co-ordinate from said longitudinal axis;

θ is the angle from a datum radius originating on said longitudinal axis; and

x is a distance measured along said axis from a datum point on that axis.

The position of the acceptable location considered longitudinally of the blank may be indicated by marking the blank. Alternatively, it may be such as to be reproduced by physical measurement of the blank at the start of a subsequent machining operation. In the manufacture of crankshafts, for example, it is usual to use a lath gauge and this, when placed in a position judged by eye on the crankshaft blank, is used to give the longitudinal position of the finished crankshaft within the blank. The procedure may be carried out such that the acceptable position will be that which can be determined by, for example, the lath gauge.

The procedure is particularly applicable to the manufacture of crankshafts and in carrying out the procedure on a crankshaft blank the blank is turned during determination of said co-ordinates to bring each crank pin in turn into an operative position in front of the signal-producing device. The latter may be a non-contact range-measuring device, for example one using a beam of electro-magnetic radiation, e.g. from a laser. Alternatively a sonic device may be used.

The invention also includes a method of manufacturing a finished component including carrying out the procedure outlined above and then machining the blank on which the procedure has been carried out to produce the finished component.

The invention will now be described in detail by way of example with reference to the accompanying diagrammatic drawing which shows a machine for carrying out the procedure of the invention.

Referring to the drawing the machine comprises a bed 10 on which are mounted longitudinal slides 11 and 12. A head stock 13 and a tailstock 14 are slidably mounted on the slides 11 and 12. The headstock 13 is movable longitudinally of the slides by a pneumatic cylinder (not shown) and the tailstock 14 is movable longitudinally by another pneumatic cylinder (not shown). The headstock and tailstock are also movable manually to obtain a rough adjustment for different lengths of crankshaft and can then be locked on to the pneumatic cylinders which give a limited range of movement. The headstock 13 comprises a clamp 17 and jaws 18 while the tailstock includes a clamp 19 and jaws 20.

Along the back of the machine is a gantry 21 on which is mounted a bracket 22 carrying a laser range finding device 23. By way of example, one suitable form of device is that obtainable from Selective Electronic Company AB, Sweden, and known as Selcon type 2005-531. However, such devices are well known and commercially available generally. A motor, not shown, is provided for traversing the laser device 23 from end to end of the gantry.

The gantry is supported by a back plate 25 and pivotally mounted on the back plate is a pair of vees 26 mounted for rocking movement on a shaft 27 and movable from an inoperative position as shown in the figure to an operative position in which they lift a crankshaft blank such as 28 into a position to be gripped by the clamps and jaws of the headstock and tailstock.

As thus far described, the machine is operated by withdrawing the headstock and tailstock 13 and 14, placing a crankshaft blank or forging on the vees 26 in an operative position, lifting the crankshaft blank so that it is in a position to be gripped in the clamps and jaws of the headstock and tailstock, moving the latter towards one another until they are in a position to grip the end journals of the blank whereupon the blank is gripped firstly by the clamps 17 and 19 and then by the jaws 18 and 20 whereupon the vees move downwardly to their inoperative position.

A motor 13a is mounted on the headstock 13 and may be used to rotate the blank.

When the crankshaft is loaded and gripped in the chucks of the machine, the laser 23 is traversed along the axis of the crankshaft from one end of the gantry 21 to the other, the crankshaft being moved angularly as required by motor 13a to present the webs of the crankshaft to the laser beam. The laser is then traversed back along the crankshaft with the crankshaft rotated through an angle of $180^{\circ}$ relative to its positions during the first traverse.

The output from the laser 23, its position along the gantry 21, and the position of the blank as determined by the angular position of motor 13a are fed to a computer. This computes the envelope of the blank from the co-ordinates which have been read by the laser and the motor position. The co-ordinates will normally be determined in terms of r, θ and x where r is the radius of the co-ordinate from the axis of rotation of the blank, θ is an angle from a datum radius from that axis, and x is a position measured along the axis from a datum point on the axis. Previously, the computer has been programmed with a signal which represents the envelope of the finished crankshaft after machining and which contains all relevant surfaces of the crankshaft, including those needing machining.

The distance information derived from the laser during its longitudinal traverses referred to above is stored, and the longitudinal dimensions of the blank are compared with the longitudinal dimensions of a machined crankshaft to compute an optimum axial location of the machined crankshaft within the blank. When this location has been decided on, the laser is traversed to the centre of one of the webs (usually one which has a machining datum forged onto it) and the blank is rotated while a series of readings are taken by the laser in order to determine the angular position of this datum relative to the machine. This step is necessary because the machining of the crank pins is normally carried out from this reference, and it is necessary to determine whether the crankshaft is capable of being machined from the blank.

The laser is then traversed to one end of the blank. The blank is termed at a constant speed by the motor 13a, and the information read by the laser for one revolution of the blank stored in the memory of the computer. The laser is then moved by a pre-determined amount to the next longitudinal position, and data again stored, until the whole crankshaft has been scanned at a succession of positions. All the features of the crankshaft i.e. end flange, tail, webs, pins and journals may be examined.

The computer calculates the centres of area of the flange, tail, pins and journals of the blank and a best line, in view of the shape of the machined crankshaft, is fitted through these centres. This is the machining axis, i.e. the axis of the blank about which it will have to be machined to produce a component. All data measured in respect of the blank is shifted to make it relative to the new machining axis, and the envelope of the blank is compared with the envelope of the finished machined crankshaft to determine whether all the machine surfaces of the crankshaft will fit within the blank envelope, i.e. a test is made to see whether the crankshaft will 'clean up' on the axis. If the crankshaft will not clean up on this axis, then the blank is rejected.

If the crankshaft will clean up, then the out-of-balance of the machined crankshaft on this machining axis is calculated. Out-of-balance is caluclated by summing the out-of-balance vectors at the measured points along the crankshaft, and referring them back to the ends of the crankshaft as vector quantities. The amount of movement of the machining axis necessary to reduce the out-of-balance to zero is then calculated, and for this calculation the computer uses a model of a cylinder of steel of the same length and weight as the crankshaft. When the position of this new axis is thus calculated, a check is made as to whether the crankshaft will clean up on such new axis. If it will, the out-of-balance on the new axis is calculated by the summation technique above referred to. Again by use of the cylindrical model, a correction to the axis position is calculated to correct the out-of-balance and the process is repeated until the calculated out-of-balance is less than a pre-determined value and the crankshaft will clean up in machining.

If a point is reached at which the crankshaft will not clean up, the process is stopped with the calculated position of the axis returned to its immediately preceding value, and an output can be given by, for example, a VDU or printing device to the operator of the apparatus.

As a result of these computations, the machining axis about which the blank is to be machined to produce the finished crankshaft has been determined and it now remains to mark onto the blank the position of this axis.

This is done by means of drills. Thus the slides 11 and 12 carry a carriage 29 at the headstock end and a carriage 30 at the tailstock end. Referring particularly to the carriage 29, this carries a centre drill 31 and an end mill 32. The centre drill is rotatable by a motor 33 while the end mill is rotatable by a motor not shown. The drill 31 and end mill 32 are mounted on a slide 34 movable transversely of the carriage by a motor 35. The carriage 29 is movable towards and away from the headstock by a motor 15. Each of the headstock and tailstock is apertured as indicated at 36 for the tailstock so that the drill 31 or the end mill 32 can pass through the aperture to operate on the exposed end surface of the crankshaft blank or forging. The arrangement at the tailstock end is similar and the same reference numerals are used with the suffix a except that the carriage 30 is moved by a motor indicated at 16.

The machining axis will, at each end, be determined by a pair of $r$, $\theta$ co-ordinates relative to the rotary axis of the blank in the machine and a datum radius from that axis. The $\theta$ co-ordinate is set by moving the blank angularly about its axis of rotation by the motor 29 which acts in an incremental manner in this instance. The $r$ co-ordinate is set by moving the drill 31 to the desired position relative to the axis of rotation of the blank. The carriage 29 is then moved to the left to cause the drill 31 to drill the end face of the blank in the desired position. A similar operation takes place at the tailstock end and the drill 31a drills an appropriate hole in the face of the blank at the tailstock end. The blank is thus provided with two centres at its ends which define the machining axis.

If desired, the end mills 32 and 32a may be used to produce a spot face about the centre thus to locate the position of the finished crankshaft within the blank longitudinally. Alternatively, a drill may be mounted on the bracket 22 and arranged to drill horizontally into one of the webs of the blank to produce a datum which locates the finished crankshaft longitudinally within the blank.

The end mills could also be used, before the procedure starts, to clean up the end surfaces of the blank. However, the end mills are not essential and may be ommitted from the machine.

Once the crankshaft blank has been drilled it is engaged by the vees 26, the jaws 18 and 20 are released and the headstock and tailstock are retracted to enable the blank to be removed from the machine.

The invention has been described in detail in relation to carrying out a procedure to determine the optimum position with a forging in which a finished crankshaft should be located to have a minimum residual out-of-balance. However the invention could also be used merely to determine whether a finished component which is to be machined can be located within a blank without concerning itself about out-of-balance.

CLAIMS

1. As a procedure in the manufacture of a complex machined component from a blank the determination of either:-

(A) an acceptable location of the component within the external envelope of the blank such that all surfaces which require to be machined on said component are within said envelope; or

(B) that no such acceptable location can be found within the blank envelope:-

said determination being effected by the following steps:

(a) determining relative to a datum the co-ordinates of a multiplicity of points on the surface of the blank by scanning the blank with a signal-producing device;

(b) computing the envelope of the blank from said co-ordinates;

(c) comparing said computed blank envelope with the envelope of the component expressed in a form comparable to that of the computed envelope;

(d) determining from said comparison whether or not the machined surfaces of the component fit within the computed blank envelope;

if as a result of step (d) the machined surfaces of the component will fit within the computed envelope of the blank then

(e) recording or storing or marking on the blank data with reference to which the machining can be carried out.

2. A procedure of determination according to Claim 1 in which the component is to be machined from a blank while rotating about an axis wherein step (a) is carried out while the blank is mounted for rotation about an axis and is turned about said axis and if, as a result of step (d) there is an acceptable location of the component within the blank in which the machined surfaces of the component will fit within the computed envelope of the blank then

(f) determining by computation the position of the axis of rotation of the component (the machining axis) relative to the blank corresponding to said acceptable location;

(g) and recording or storing or marking on the blank the resultant position of the machining axis and if required the acceptable location of the component along said machining axis.

3. As a procedure in the manufacture of a component which is to be machined from a blank while rotating about an axis and when completed have an out-of-balance about said axis within predetermined tolerances the determination of either:-

(A) an acceptable location of the component within the external envelope of the blank; such that (1) all surfaces which require to be machined on said component are within said envelope; and (2) the out-of-balance of said component about its rotational axis will be within said predetermined tolerances; or

(B) that no such acceptable location can be found within the blank envelope:-

said determination being effected by the following steps:

(a) mounting said blank for rotation about a longitudinal axis;

(b) determining relative to a datum (e.g. said axis) the co-ordinates of a multiplicity of points on the surface of the blank by scanning the blank with a signal-producing device;

(c) computing the envelope of the blank from said co-ordinates;

(d) comparing said computed blank envelope with the envelope of the finished component in a form comparable with that of the computed envelope;

(e) determining from said comparison whether or not the machined surfaces of the component fit within the computed blank envelope;

if as a result of step (e) there is an acceptable location of the component within the blank in which the machined surfaces of the component will fit within the computed envelope of the blank then

(f) determining by computation the position of the axis of rotation of the component (the machining axis) relative to the blank corresponding to said acceptable location;

(g) computing the out-of-balance of the finished component about the machining axis;

(h) computing a new position of the machining axis of the component relative to the blank to bring the out-of-balance of the finished component to a desired value (for example zero);

(i) and then recording or storing or marking on the blank the resultant position of the machining axis and if required the acceptable location of the component along said machining axis.

4. A procedure according to Claim 3 wherein said computation of the new position of the machining axis is carried out by:-

(a) considering the component as a cylinder of the material of the component, and computing the movement of the machining axis necessary to bring such cylinder to the balanced condition;

(b) notionally moving the machining axis to its new position;

(c) comparing the envelope of the finished component, with the machining axis in its new notional position, with the computed envelope of the blank to ascertain if all said machined surfaces are within the blank envelope;

(d) if all said surfaces are within said blank envelope, computing the out-of-balance of the finished component with the machining axis in its said new notional position

(e) successively repeating steps (a) to (d) until the computed out-of-balance of the finished component is within tolerances while all said surfaces are within said blank envelope.

5. A procedure according to Claim 2, 3 or 4 wherein the co-ordinates are determined in terms of $\underline{r}$, $\underline{\theta}$ and $\underline{x}$ where:-

$\underline{r}$ is the radius of the co-ordinate from said longitudinal axis;

$\underline{\theta}$ is the angle from a datum radius originating on said longitudinal axis; and

$\underline{x}$ is a distance measured along said axis from a datum point on that axis.

6. A procedure according to any one of Claims 2 to 5 wherein the position of said acceptable location considered longitudinally of the blank is a location which can be reproduced by physical measurement of the blank at the start of a subsequent machining operation on the blank.

7. A procedure according to any one of Claims 3 to 6 wherein the component is a crankshaft.

8. A procedure according to Claim 7 wherein the crankshaft blank is turned during the determination of said co-ordinates to bring each crank pin in turn into an operative position in front of said device.

9. A procedure according to any one of Claims 1 to 8 wherein the device is a non-contact, range-measuring device.

10. A procedure according to Claim 9 wherein the device uses a beam of electromagnetic radiation, e.g. from a laser.

11. A procedure according to Claim 9 wherein the device is a sonic device.

12. A method of manufacturing a finished component from a blank including the determination of said acceptable location as claimed in Claim 1 or any of Claims 9 to 11 when linked with Claim 1 and machining the blank to produce a finished component at said location within the blank.

13. A method of manufacturing a finished component from a blank including the determination of the resultant position of the machining axis and said acceptable location as claimed in any one of Claims 2 to 8 or Claims 9 to 11 when linked with any of Claims 2 to 8 and machining the blank about said machining axis to produce a finished component at said location within the blank.

14. A machined component manufactured by the method claimed in Claim 12 or Claim 13.

15. Apparatus adapted to carry out the method according to any one of Claims 3 to 13, comprising means for mounting said blank for rotation about a longitudinal axis, a signal producing device movable longitudinally of the blank to scan the blank to determine the coordinates of a multiplicity of points on the surface thereof, computing means for computing a desired position of an axis of the blank about which machining thereof is to be carried out, and means for mounting on said blank the position of said axis.

0081376

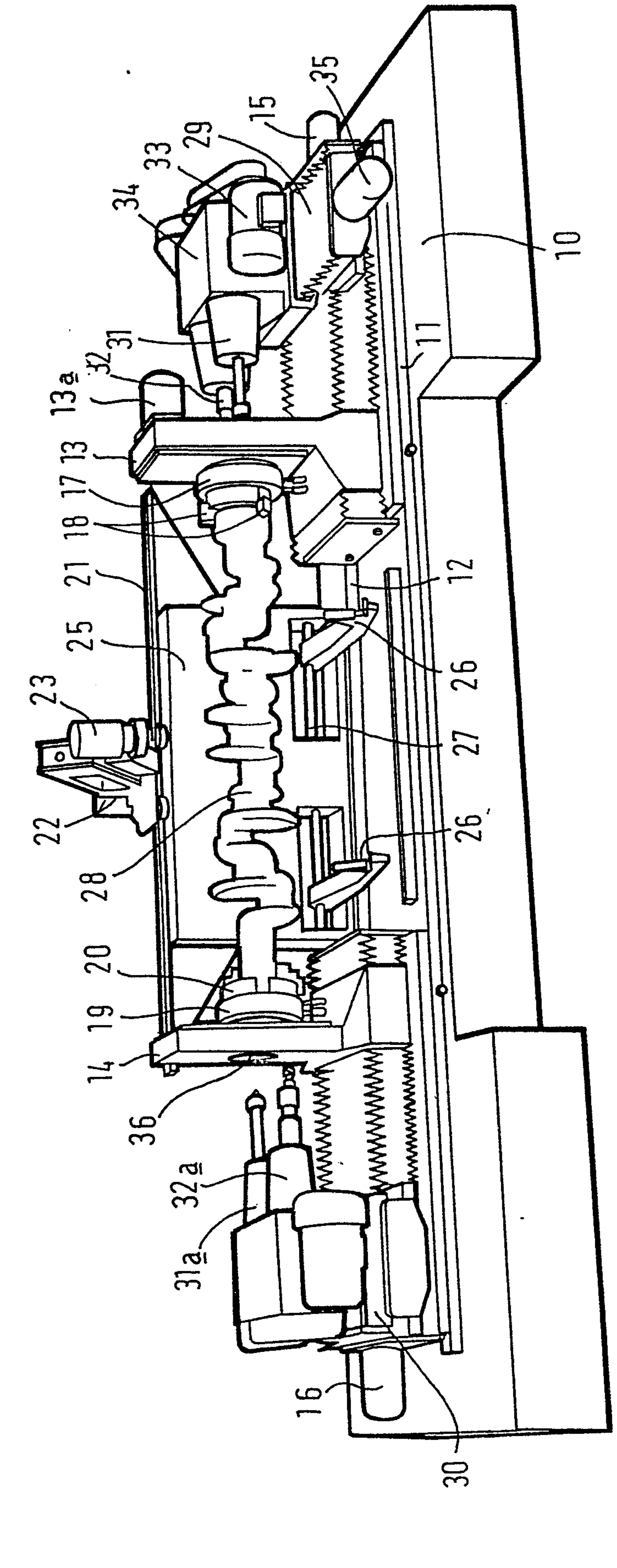
10
11
12
13
13a
14
15
16
17
18
19
20
21
22
23
25
26
26
27
28
29
30
31
31a
32
32a
33
34
35
36